# EUROPEAN PATENT APPLICATION

(11) **EP 1 566 729 A2**
(43) Date of publication of application: **24.08.2005**
(21) Application number: 05003919.7
(22) Date of filing: 23.02.2005
(51) Int. Cl.: G06F 3/033

(54) **Information input device**

(30) Priority: 23.02.2004 JP 2004047116; 05.04.2004 JP 2004111401
(71) Applicant: Aruze Corp., Tokyo 135-0063 (JP)
(72) Inventor: Takeda, Kengo, Aruze Corp., Koto-ku Tokyo 135-0063 (JP); Sato, Osamu, Aruze Corp., Koto-ku Tokyo 135-0063 (JP); Haishima, Jun, Aruze Corp., Koto-ku Tokyo 135-0063 (JP); Sato, Junpei, Aruze Corp., Koto-ku Tokyo 135-0063 (JP)
(74) Representative: Grünecker, Kinkeldey, Stockmair & Schwanhäusser Anwaltssozietät

(57) **Abstract**

The present invention provides, in a gaming machine which uses a game table, an information input device which can detect positions indicated by player's hands or the like without relying on the detection of touching of the game table by players. An information input device includes a table unit which has one or a plurality of input regions which are preset, a position detecting unit which detects a position of an object on the table and outputs positional information on the object, and a positional information determining unit which determines whether the position of the object is in any one of the input regions for a given period based on the positional information on the object from the position detecting unit and treats the positional information valid when the positional information determining unit determines that the object is in the input region for the given period.

## Description

### CROSS-REFERENCES TO THE RELATED APPLICATIONS

This application is based upon and claims the priority from a prior Japanese patent application No. 2004-47166, filed on February 23, 2004 and a prior Japanese patent applicationNo. 2004-111401, filedonApril5, 2004, in Japan, entire contents of which are incorporated herein by reference.

This application is related to co-pending U. S. Patent Application referred to as a prior Japanese patent application 2004-042697 filed in Japan on February 19, 2004 and a co-pending U.S. Patent Application referred to as a prior Japanese patent application No. 2004-047114 filed in Japan on February 23, a prior Japanese patent application No. 2004-2047651 filed in Japan on July 12, 2004 and a prior Japanese patent application No. 2004-244124 filed in Japan on August 24, 2004.

### BACKGROUND OF THE INVENTION

### FIELD OF THE INVENTION:

The present invention relates to an information input device, and more particularly to an information input device which allows an image display device such as a screen or a large-sized display, for example, to display an image and also can, when a user indicates a certain position in the displayed image, treat the position as inputting of information.

### 2. RELATED ART:

With respect to a conventional gaming machine which is installed in a game arcade, a game arena, a casino or the like (a gaming machine which displays a game table image on a CRT monitor or the like and uses the game table image as a game table), an image display device is laid down horizontally and is used as a table monitor.

In such a gaming machine , to allow a player to indicate which position on the game table he/she decides to bet, each player uses a manipulating part which is provided in front of the user.

Accordingly, the manipulation of the player is limited to the manipulating part in front of each player and hence, the player cannot perform an operation such as betting of chips to a given position by extending his/her hand to the game table which he/she performs an actual roulette or a card game and hence, there has been a drawback that such a game lacks the presence compared to the actual game.

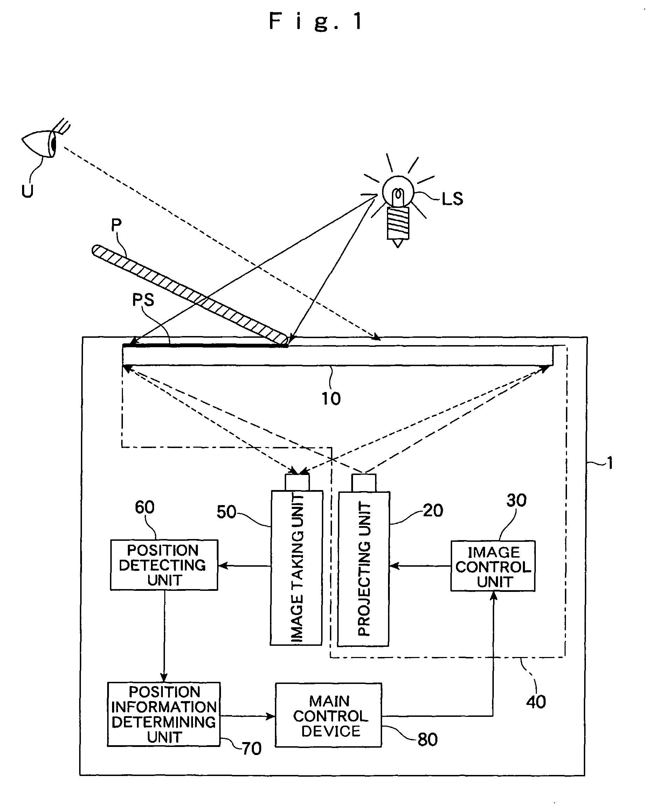

As a technique which can overcome such a drawback, there has been proposed a method in which a touch panel sensor is provided to a game table, and when a user touches the game table, a position which the player indicates is detected, and the detected position is reflected on the game (Japanese Laid-open publication 2001-273092 (Fig. 1, paragraphs [0028] to [0033])

### SUMMARY OF THE INVENTION

However, in the above-mentioned method which mounts the touch panel sensor on the game table, when a gaming machine which allows a plurality of players to simultaneously play a game is realized, it is necessary to make the game table large-sized corresponding to the increase of the number of players. As a result, although a large-sized touch panel sensor becomes necessary, this pushes up a manufacturing cost. Further, when the game table is laid down horizontally, there exists a drawback with respect to the strength thereof. Still further, there has been also a drawback that when a plurality of players simultaneously touch the touch panel sensor, it is difficult to detect the touched positions.

Further, since a large number of players touch the touch panel sensor, there has been a drawback that the detection accuracy is deteriorated due to smear on the game table or the malfunction of the touch panel sensor.

Accordingly, it is an object of the present invention to provide an information input device which can overcome the above-mentioned drawbacks and can detect positions indicated by a player's hand or the like without relying on the detection of contacting of players.

The present invention has the following constitutional features as means to overcome the above-mentioned drawbacks.

According to one aspect of the present invention, there is provided an information input device which includes a table means(an screen unit, a screen) which has one or a plurality of input regions which are preset, a position detecting means (a position detecting part, a sensor) which detects a position of an object on the table and outputs positional information on the object, and a positional information determining means (a positional information determining part) which determines whether the position of the object is in any one of the input regions for a given period based on the positional information on the object from the position detecting means and treats the positional information valid when the positional information determining means determines that the obj ect is in the input region for the given period.

According to this aspect of the present invention, outputting of the positional information is performed while determining whether the object remains in an input region for a given period and hence, even when the player indicates another input region after simply passing over an input region, the player can perform the inputting of information with respect to the input region which the player intends to indicate without an erroneous recognition.

According to another aspect of the present invention, there is provided an information input device which includes a projecting means (a projecting part, a DLP) whichprojects an image, a screen means (an image focusing means, a transmissive screen) which allows an image projected by the projecting means to be focused thereon and allows a shade of an indicator which indicates a position of the image to be projected thereto, an image taking means (a DVC) which takes an image of a back surface of the screen and outputs image data which contains the shade of the indicator, apositiondetectingmeans (a position detecting part) which detects the position which is indicated by the indicator based on a shade which is contained in the image data and outputs the detected position as positional information,and a positionalinformation determining means (a positional information determining part) which determines whether the position of the object is in any one of the input regions for a given period based on the positional information from the position detecting means and treats the positional information valid when the positional information determining means determines that the position is in the input region for the given period, wherein the position detecting means determines the position of the indicator based on a contrast of the shade.

In this aspect of the present invention, the screen is used for the image display and, at the same time, the shade of the indicator which is reflected on the screen is subjected to the image processing to use the shade of the indicator for inputting of information. In this aspect of the present invention, the position of the shade is detected and, at the same time, the manner how the shade changes during a given period is also checked and the detected change is used as a portion of the input information. The change of shade which is used as the input is the movement of the shade, the change of contrast or the like.

In this aspect of the present invention, when shades of a plurality of indicators are generated as in a case in which a plurality of players simultaneously indicate the screen using their hands, positional information determining means determines whether the position of each shade is within any one of input regions for a given period and, when it is determined that the object is in the input region for the given period, the positional information is treated as the valid information. As a result, it is possible to utilize one screen as the inputting means which receives the inputting from the plurality of players.

In this aspect of the present invention, it may be possible to specify the distal end of the indicator by making use of the characteristics that the closer the distance between the indicator and the screen, the shade becomes thicker, while the remoter the distance between the indicator and the screen, the shade becomes thinner. In this case, it is possible to more accurately specify which position is indicated by the indicator.

According to the present invention, since the processing of the game is performed when the positional information is determined as the valid positional information, it is possible to avoid the image processing or the like which requires machine power when the movement of the indicator is erroneously inputted whereby the processing ability of the device can be effectively utilized.

Further, according to another aspect of the present invention, it is possible to utilize one screen as the input unit which receives inputting from the plurality of players.

### BRIEF DESCRIPTION OF THE DRAWINGS

Fig. 1 is a view showing a basic constitutional example of an information input device;
Fig. 2 is a view showing a modification of the basic constitutional example of the information input device;
Fig. 3 is a view showing another basic constitutional example of the information input device;
Fig. 4 is a view showing a modification of another basic constitutional example of the information input device;
Fig. 5 is a perspective view of an appearance of a gaming machine according to the first embodiment which utilizes the information input device;
Fig. 6 is a view showing an arrangement example of an optical system which constitutes the gaming machine according to the first embodiment;
Fig. 7 is a block diagram showing an electrical constitutional example of the gaming machine according to the first embodiment;
Fig. 8 is a view showing a screen example displayed on a front display;
Fig. 9 is a view showing a screen example displayed on a transmissive screen of the gaming machine;
Fig. 10A to Fig. 10C are views showing an image of a back surface of the transmissive screen, wherein Fig. 10A is a view showing an example of the image which is obtained by photographing the back surface of the transmissive screen,
Fig. 10B is a view showing an example of the image which is obtained by photographing the back surface of the transmissive screen which contains a shade, and Fig, 10C is a view which shows an image after binary processing of the image data shown in Fig. 10B;
Fig. 11 is a flow chart showing an example of position detecting processing which performs the position detection of indicators using the back surface image data;
Fig. 12A to Fig. 12C are views showing an example of an image of a back surface of the transmissive screen, wherein Fig. 12A is a back surface image view for explaining a processing example of a positional information determining part, Fig. 12B is a back surface image view which follows Fig. 12A, and Fig. 12C is a back surface image view which follows Fig. 12B;
Fig. 13 is a block diagram showing an electrical constitutional example of the gaming machine according to a modification of the first embodiment;
Fig. 14 is a perspective view of an appearance of a gaming machine which utilizes the information input device according to the second embodiment;

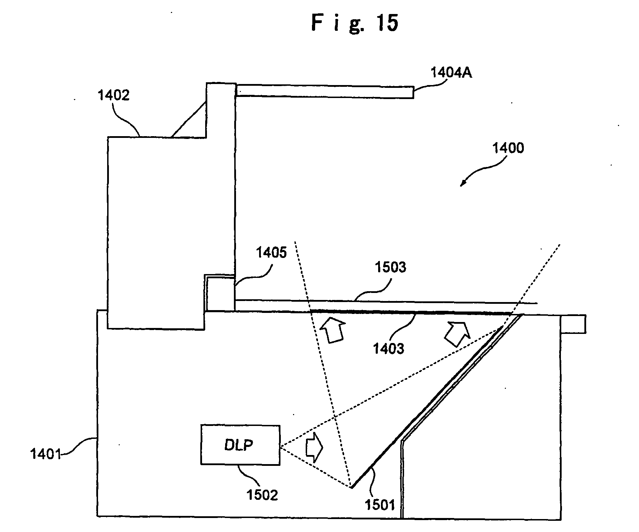

Fig. 15 is a view showing an arrangement example of an optical system which constitutes the gaming machine according to the second embodiment;
Fig. 16 is a block diagram showing an electrical constitutional example of the gaming machine according to the second embodiment;
Fig. 17A and Fig. 17B are views showing the gaming machine indicating scanning regions of a sensor, wherein Fig. 17A is a plan view of the gaming machine and Fig. 17B is a front view of the gaming machine;
Fig. 18 is a plan view of the gaming machine indicating scanning regions of a sensor when a player is specified;
Fig. 19 is a plan view of the gaming machine indicating scanning regions of a sensor when a player is specified;
Fig. 20 is a flow chart showing an operational example related to the positional detection of the gaming machine;
Fig. 21 is a view for explaining a modification according to the first embodiment;
Fig. 22A to Fig.22C are views showing a case in which a player extends his/her hand into his/her own input regions to indicate a region which he/she desires to bet;
Fig. 23A to Fig. 23C are views corresponding to Fig. 22A to Fig. 22C and showing an example of an image which is obtained by photographing a back surface of a transmissive screen;
Fig. 24 is a flow chart showing one example of positional information determining processing according to the third embodiment;
Fig. 25A to Fig. 25D are views showing a transmissive screen, wherein Fig. 25A is a view showing a mode in which an image is projected to the transmissive screen surface from a DLP, Fig. 25B is a view showing a mode in which the threshold value is divided into and fixed to three threshold values corresponding to the distance from the center of radiation light with respect to the transmissive screen,
Fig. 25C is a view showing the change of the threshold value in the X-axis direction in the case shown in Fig. 25B, and
Fig. 25D is a view showing the manner of setting another threshold value separate from Fig. 25C; and
Fig. 26 is a flow chart showing a specific example of the binarization processing of the image in the fourth embodiment.

### DESCRIPTION OF THE PREFERRED EMBODIMENTS

Hereinafter, embodiments of the present invention are explained in conjunction with drawings. Fig. 1 is a view showing a basic constitutional example an information input device according to the present invention.

### [First mode for carrying out the present invention]

The information input device 1 includes a screen unit 10, a image control unit 30 which supplies image data, a projecting unit 20 which projects images to a front surface of the screen unit 10 based on image data from the image control unit, an image taking unit 50 which photographs the screen unit 10 on which a shade PS of an indicator P is formed from a back surface of the screen unit 10, a position detecting unit 60 which receives image data of the back surface of the screen unit 10 outputted from the image taking unit 50, determines a position of the shade PS of the indicator P based on the image data, and outputs positional information, a positional information determining unit 70 which determines whether the shade PS is positioned in an input region which is preset for a given period based on the positional information from the position detecting unit 60, and, when the shade PS is positioned for the given period, outputs this positional information as valid information, and an main control device 80 which instructs an image to be projected to the screen unit 10 to the image control unit 30 based on the positional information outputted from the positional information determining unit 70.

The screen unit 10 has a light transmitting property and allows light from a front surface and a back surface thereof to pass therethrough. The screen unit 10 is, for example, a transmissive screen for a liquid crystal projecting unit. The transmissive screen which constitutes the screen unit 10 includes a light scattering layer, efficiently scatters light from the liquid crystal projecting unit, and also includes a screen which reflects a light contrast image.

When a user U observes the screen unit 10 from the front surface of the screen unit 10, an optical image which is radiated from the back surface side of the screen unit 10 by the projecting unit 20 focuses an image on the screen unit 10. As a result, the user U can observe an image corresponding to the image data which the projecting unit 20 radiates.

The indicator P is an object or a means which the user uses for indicating a desired position of the image displayed on the front surface of the screen unit 10 and is a hand (including an arm portion) of the user U himself/herself, an indicating rod or the like, for example. The indicator P is illuminated by a light source LS and hence, a shade PS of the indicator P is reflected on the screen unit 10. Since the screen unit 10 has the light transmitting property, even when the screen unit 10 is observed from a back surface thereof, the shade PS is observed. Here, the light source LS may be a lateral light source such as sunbeams or a lighting equipment which is provided in an environment in which the information input device 1 is arranged. Further, the light source LS may be a lighting equipment such as a fluorescent lamp mounted in the information input device 1.

The projecting unit 20 is an optical projecting system which is capable of projecting an optical image to the screen unit 10 based on the image data and is a liquid crystal projecting unit (DLP (Digital Liquid Protector)), for example. The light source LS is preferably a light source which emits a white light. By allowing the white light to transmit screen unit 10, the shade PS of the indicator P is observed in black on the back surface of the screen unit 10 and, at the same time, regions other than the shade PS are observed in white whereby an image equivalent to a white/black image can be obtained.

The image taking unit 50 is a unit which generates the image data of the back surface of the screen unit 10 and is, for example, a digital camera, a digital video camera, a CCD camera unit, or the like.

The image control unit 30, the position detecting unit 60, the main control device 80 and the positional information determining unit 70 are respectively constituted of a device which includes a central processing unit (CPU), a main memory (RAM), areadonlymemory (ROM), an input/output device (I/O), and an external storage device such as a hard disc device or the like when necessary. That is, these units may be formed of an information processing device such as a computer, a workstation, an LSI chip or the like. In the above-mentioned ROM or the hard disc device, a program which allows the information processing device to function as the image control unit 30, the position detecting unit 60, the main control device 80 or the positional information determining unit 70 is stored. By storing this program in the main memory and by allowing the CPU to execute this program, the image control unit 30, the position detecting unit 60 or the main control device 80 can be realized. Further, the above-mentioned program is not always necessary to be stored in the storage device in the inside of the information processing device and may be provided from an external device (for example, an ASP (a server of an application service provider or the like) and may be stored in the main memory.

The image control unit 30, the position detecting unit 60 and the main control device 80 may be respectively realized by individual information processing device or one information processing device may be configured to function as the image control unit 30, the position detecting unit 60 and the main control device 80.

The image control unit 30 stores a plurality of image data to be displayed to the user, wherein the necessary image data is read out in response to a command from the main control device 80 and is subjected to the image processing when necessary, and is provided to the projecting unit 20.

The position detecting unit 60 receives the image data of the back surface of the screen unit 10 from the image taking unit 50, detects the position of the shade PS of the indicator P by performing the necessary image processing on the image data, and outputs the detected position as the positional information. As the image processing, threshold value processing for performing the region extracting of the shade PS, the edge detection for extracting a profile of the shade PS or the like is considered. The position detecting unit 60 generates the positional information on the shade PS by making use of the coordinate positional information on pixels of a shade region or a profile line obtained by these threshold value processing or the edge detection.

The main control device 80 has a function of controlling the operation of the whole information input device 1, wherein the main control device 80 instructs the image data to be outputted and the timing at which the image data is outputted or the like to the image control unit 30 and, at the same time, instructs the image control unit 30 to change the image data in response to the positional information on the shade PS from the position detecting unit 60.

The positional information determining unit 70 determines whether the shade PS is positioned in the input region which is preset for a given period based on the positional information from the position detecting unit 60 and, when the shade PS is positioned for the given period, output this positional information as valid information. Here, the positional information determining unit 70 may determine whether the shade PS is positioned in the input region which is preset for a given period based on the image data from the image taking unit 50 in place of the positional information. Further, the given period may be counted by a method which uses a timer or a method which counts the number of frames of the motion picture data transmitted from the image taking unit 50.

According to this information input device 1, it is possible to provide the information inputting technique which is capable of changing the image which is displayed on the screen unit 10 in accordance with the position which the user indicates with the indicator P. That is, the information input device 1 can make use of the screen unit 10 as the image display unit and, at the same time, can make use of the screen unit 10 as the information input device which allows the user to input the positional information.

The information input device 1 has following advantages due to the above-mentioned constitutional features.

According to this system, it is possible to make the screen unit 10 which constitutes the video display unit function also as the manipulating part and hence, the reduction of cost, the elimination of parts and the simplifying of the structure can be realized.

According to this system, by making use of the characteristics that the closer the indicator P approaches to the screen unit 10, the shade PS which is formed on the screen unit 10 by the indicator P becomes thicker, while the remoter the indicator P moves away from the screen unit 10, the shade PS becomes thinner, it is possible to accurately perform the determination of the position of the portion (usually the distal end) of the indicator P which is arranged close to the screen unit 10.

Further, compared to the technique which performs the position determination by directly photographing the indicator P from the front side of the screen unit 10 using the image taking unit 50, according to this system, there exists an advantage that there is no possibility of the lowering of the positional accuracy attributed to the reflection of the surrounding of the screen unit 10.

### [Modification of the first mode for carrying out the present invention]

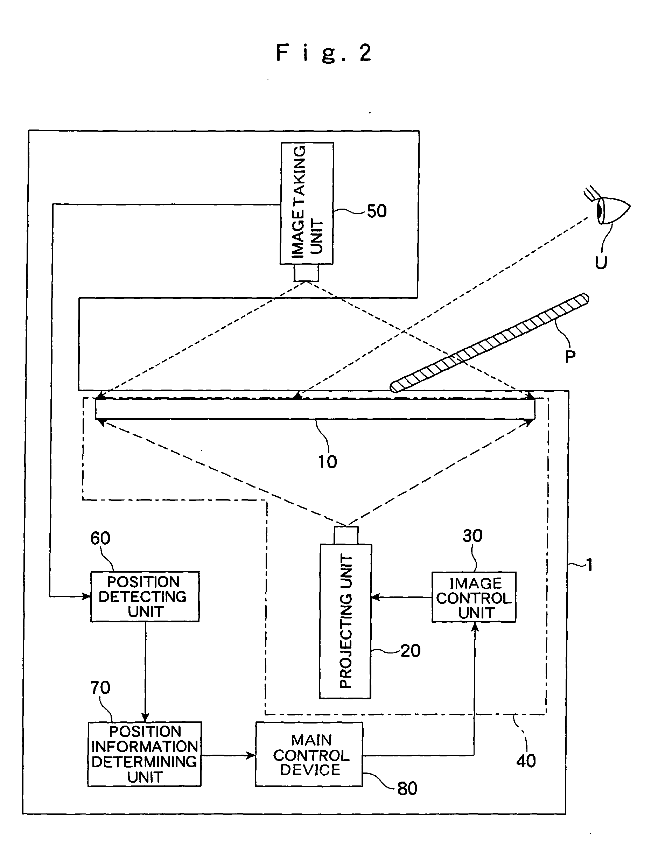

Fig. 2 shows a modification of the information input device 1 shown in Fig. 1. In the system shown in Fig. 1, the position of the indicator P is photographed from the lower side of the screen unit 10 and the detection of the position is performed using the image which contains the shade of the indicator P. However, in the modification shown in Fig. 2, the image taking unit 50 is arranged above the screen unit 10 and the detection of the position is performed by directly photographing the indicator P. That is, the information input device 1 according to this modification is the constitution which performs the detection of the position using an actual image of the indicator P in place of the shade of the indicator P. It is also possible to realize the information input device having such a constitution.

### [Second mode for carrying out the present invention]

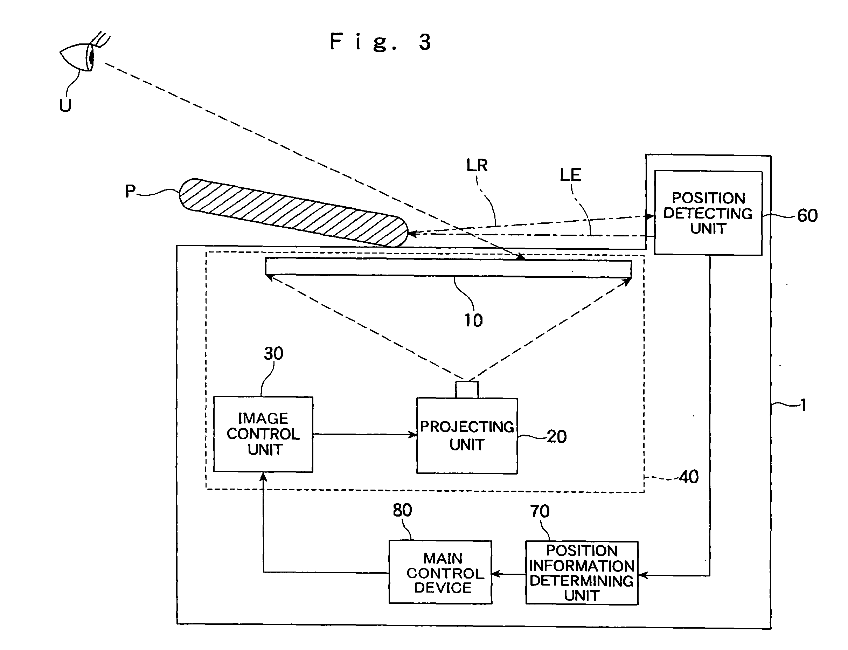

Next, the second mode for carrying out the present invention is explained in conjunction with Fig. 3. Fig. 3 is a basic constitutional view of an information input device according to the second mode for carrying out the present invention.

The information input device 1 includes a screen unit 10 which constitutes an image display unit 40, a image control unit 30 which supplies image data, a projecting unit 20 which projects images to a front surface of the screen unit 10 based on image data from the image control unit 30, a position detecting unit 60 which emits light LE along a surface of the screen unit 10 and receives a reflection light LR which is reflected on the indicator P which constitutes a position measuring object and detects the position of the indicator P, a positional information determining unit 70 which determines whether the position of the indicator P is positioned in an input region which is preset for a given period and, when the position of the indicator P is positioned for the given period, outputs this positional information as valid information, and an main control device 80 which instructs an image to be projected to the screen unit 10 to the image control unit 30 based on the positional information outputted from the positional information determining unit 70 and the positional information outputted from the position detecting unit 60.

The screen unit 10, the image control unit 30, the projecting unit 20 and the main control device 80 are respectively substantially equal to the screen unit 10, the image control unit 30, the projecting unit 20 and the main control device 80 in the first embodiment and hence, the explanation of these units is omitted.

Thepositiondetectingunit 60 of this embodiment emits light (emitting light) LE having directivity along the surface of the screen unit 10 such that the light LE scans the surface of the screen unit 10, and receives the reflection light LR which returns after being reflected on the indicator P. The position detecting unit 60 has a function of obtaining the direction and the distance of the indicator P with respect to the position detecting unit 60 based on the emitting direction of the emitted light LE and a light quantity of the reflection light LR, of obtaining the position of the indicator P based on these direction and distance and of outputting the positional information.

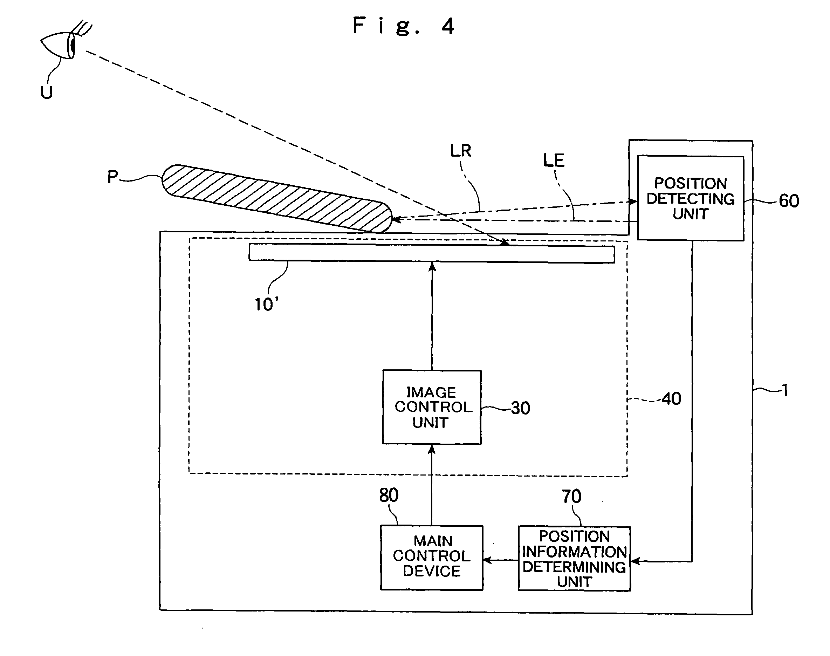

Fig. 4 is a block diagram showing another constitutional example of the information input device 1 according to the second embodiment. The information input device 1 of this embodiment differs from the information input device 1 shown in Fig. 3 with respect to a point that the image display unit 40 is constituted of a video display unit 30 and a display unit 10' which displays an image in accordance with image data supplied from the video display unit 30. However, the information input device 1 of this embodiment has the substantially same constitution as the information input device 1 shown in Fig. 3 with respect to other constitutions. That is, it is possible to constitute the substantially equal device as the information input device 1 shown in Fig. 3 using the constitution shown in Fig. 4.

Next, the embodiments according to the present invention are explained

### [First embodiment]

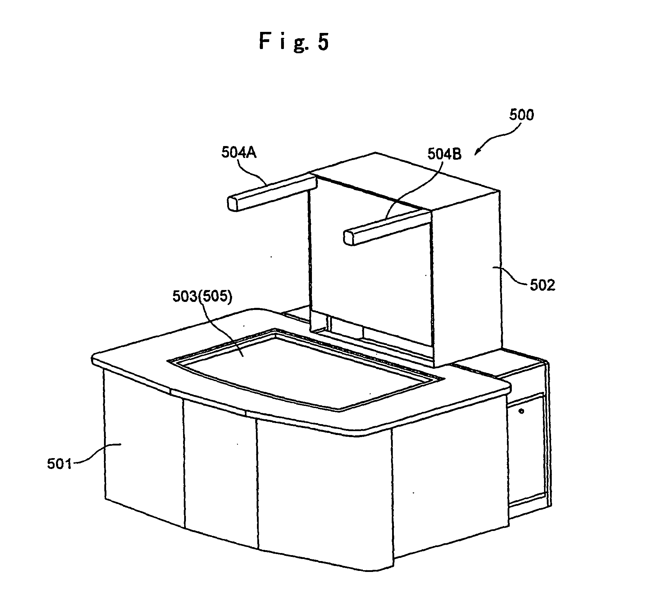

Fig. 5 is a perspective view of an appearance of a gaming machine which uses the information input device 1 according to the present invention. Here, although the gaming machine is explained as a device which allows users to play a baccarat game, the gaming machine according to this embodiment is not limited to the baccarat game. That is, the gaming machine according to this embodiment is applicable to any game such as poker, black jack, bridge or roulette or the like so long as the information input device 1 according to the present invention is applicable.

The gaming machine 500 according to this embodiment includes a table part 501 and a front display 502 which is mounted on a rear portion of the table part 501.

Table part 501 houses the optical system and information processing equipment which constitute the information input device 1 therein. An opening is formed in a center portion of an upper surface of the table part 501 anda transmissive screen 503 which constitutes the screen unit 10 is extended over the opening. The transmissive screen 503 constitutes the image displayunit 40 and functions as an upper display (hereinafter referred to as "table screen 505") which displays the game image to the users. Here, an upper portion of the transmissive screen 503 is protected by a transparent plate member such as a glass panel thus preventing the transmissive screen 503 from being broken or smeared even when the player touches the table screen 506 with his/her hand which constitutes the indicator P.

Fluorescent lumps 504A, 504B which constitute the light sources LS are formed both ends of an upper portion of the front display 502 and hence, the shade PS of the indicator P is projected on the transmissive screen 503. Here, the arrangement position of the fluorescent lumps 504A, 504B is not always limited to the mode shown in Fig. 5. That is, the fluorescent lumps 504A, 504B may be arranged at any position so long as the shade PS of the indicator P is projected on the transmissive screen 503. Further, when there is illumination which allows the shade PS of the indicator P to be projected on the transmissive screen 503 at locations where the gaming machine 500 is installed, the fluorescent lumps 504A, 504B may not be provided.

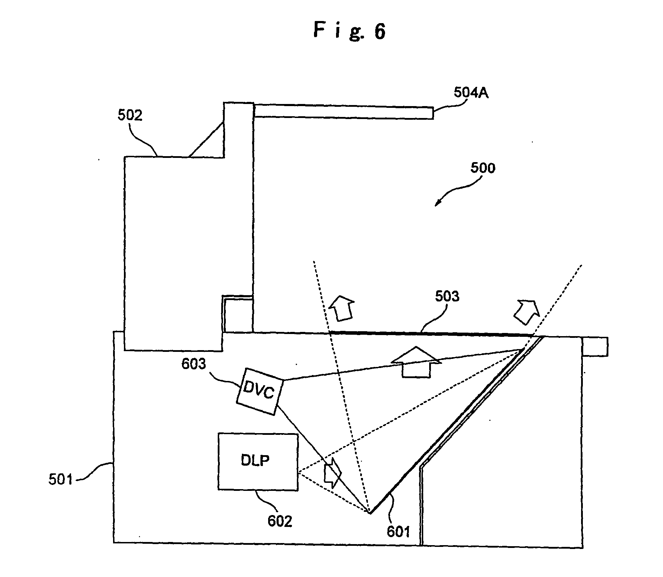

Fig. 6 is a view showing an arrangement example of the optical system which constitutes the information input device 1 housed in the inside of the table part 501.

To a center portion of the table part 501, the transmissive screen 503 is fixed in a state that the transmissive screen 503 is protected by a glass plate or the like. A mirror 601 is arranged in an inclined state below the transmissive screen 503. At a position which faces the mirror 601, a digital liquid crystal projecting unit (hereinafter referred to as "DLP") 602 which corresponds to the projecting unit 20 and a digital video camera (DVC) 603 which corresponds to the image taking unit 50 are fixed. The mirror 601 reflects the image radiated from the DLP 602 toward the transmissive screen 503 and the distance between the mirror 601 and the DLP 602 and an angle of a reflection surface are adjusted so as to project the image with a desired size. In the same manner, the mirror 601 is arranged in a state that the mirror reflects the image of the back surface of the transmissive screen 503 toward the digital video camera 603 and the distance between the mirror 601 and the digital video camera 603 and an angle of a reflection surface with respect to the transmissive screen 503/the digital video camera 603 are adjusted such that the digital video camera 603 can photographs the back surface of the transmissive screen 503.

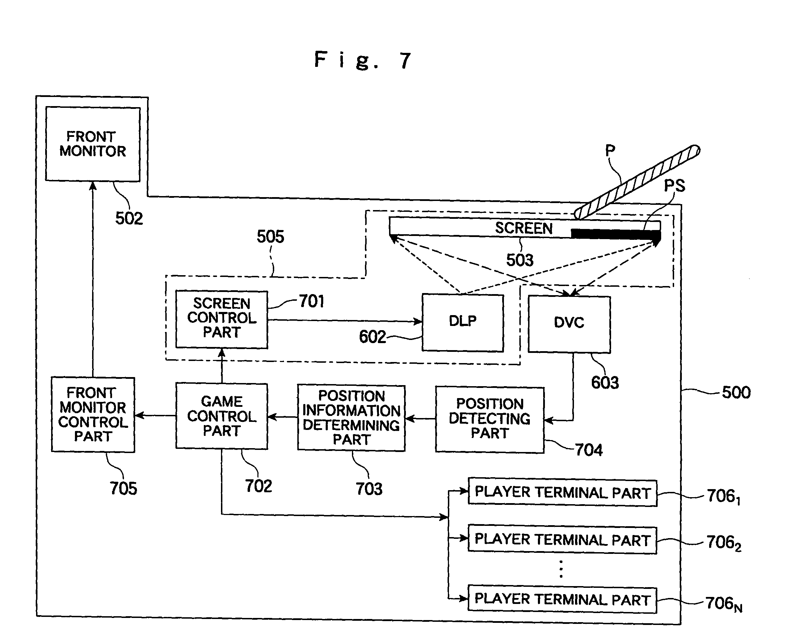

Next, an electrical constitutional example of the gaming machine 500 is explained. Fig. 7 is a block diagram showing the electrical constitutional example of the gaming machine 500.

As shown in Fig. 7, the gaming machine 500 is provided with the transmissive screen 503. The DLP 602 which constitutes the projecting unit 20 optically projects the image related to the game to the transmissive screen 503. A screen control part 701 which constitutes the image control unit 30 supplies the image data (hereinafter referred to as "front surface image data") to the DLP 602. The digital video camera 603 which constitutes the image taking unit 50 photographs the back surface of the transmissive screen 503 and outputs image data (also referred to as "back surface image data") obtained by photographing the back surface of the transmissive screen 503. A position detecting part 704 which constitutes the position detecting unit 60 detects the position indicated by the indicator P by processing this back surface image data and outputs the positional information. The positional information determining part 703 which constitutes the positional information determining unit 70 determines whether the indicator P is present in a given region for a given period based on the positional information and, when the indicator P is present for the given period, outputs this positional information as valid information. A game control part 702 which constitutes the whole control unit 80 has a function of controlling the operation of the gaming machine 500. The game control part 702 instructs which image data is to be outputted to the screen control part 701 and at which timing the image data is outputted. At the same time, the game control part 702 receives the positional information from the position detecting part 704 and controls the operation of the gaming machine 500 based on this positional information.

The front display control part 705 outputs image data of the image to be displayed on the front display 502 (hereinafter referred to as "front image data") in response to the instruction from the game control part 702. The front display 502 receives and displays the front image data. The image displayed on the front display 502 informs, in cooperation with the image displayed on the transmissive screen 503, the situation, the progress and the like of the game to the users.

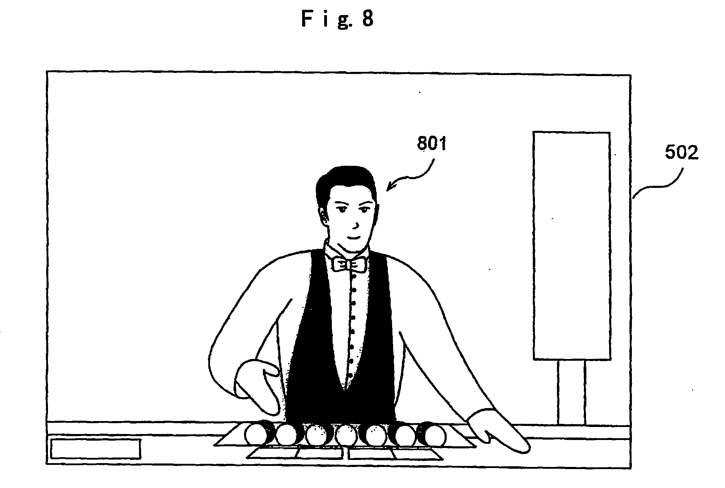

In this embodiment, a dealer of a baccarat is displayed as a moving image on the front display 502. Fig. 8 is a screen example displayed on the front display 502. On the screen, the dealer 801 is displayed. That is, the mode in which the dealer distributes cards, draws cards and delivers chips in accordance with the progress of the game is displayed on the screen and hence, it is possible to obtain an effect as if the player is actually playing the baccarat with an actual dealer.

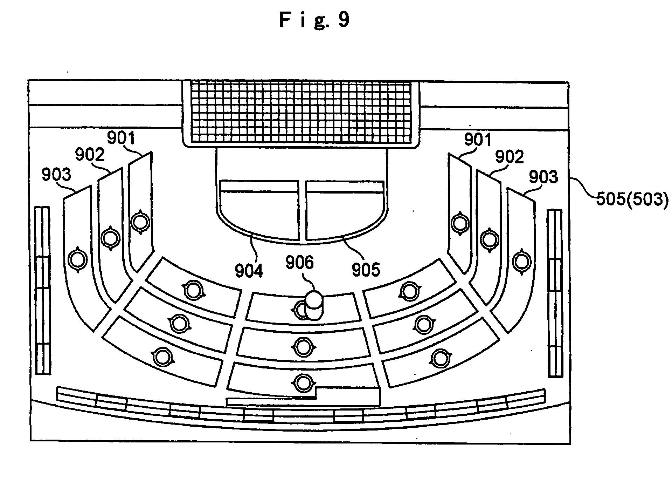

Next, a screen example displayed on the table screen 505 (transmissive screen 503) which constitutes the image display unit 40 is explained. Fig. 9 is a screen example displayed on the table screen 505 of the gaming machine 500. In this example, a screen which imitates a baccarat table is displayed on the table screen 505. On the baccarat table illustrated in the example, regions 901, 902, 903 for betting to "BANKER", "PLAYER", "DRAW" are displayed for five respective players. By allowing the player to indicate any one of the regions 901, 902, 903 using his/her hand which constitutes the indicator P or the like, the information on which one of the "BANKER", "PLAYER", "DRAW" the player bets is inputted to the gaming machine 500. Here, the number of chips, an amount of money and the number of credits for betting can be decided by the player using a betting button of a player terminal part 706 described later. A pile of chips 906 which each player possesses can be also displayed on the table screen 505. When the player instructs his/her betting to any one of the "BANKER", "PLAYER", "DRAW" using the indicator P, the image is changed to allow the table screen 505 to perform the display in which the number of chips which are bet are moved to any one of the regions 901, 902, 903 which are designated by the indicator P from a pile of chips in front of the player.

Further, the table screen 505 includes regions 904, 905 to which the dealer 801 distributes cards of BANKER and PLAYER and images of cards are displayed on these regions 904, 905.

Returning back to Fig. 7, the electrical constitutional example of the gaming machine 500 is further explained.

To the game control part 702, a plurality of player terminal parts 706₁ to 706_{N} are connected. Each player terminal part 706 is a terminal which receives coins, bills, prepaid cards, credit cards or the like and changes them to credits (medals/coins) which can be used in the gaming machine 500. The player terminal part 706 also has a delivery function of paying out the credits (medals/coins) which the player terminal part 706 possesses in response to the payout indication from the player at a point of time that the payout indication is made and a bet inputting function for determining the number of bets, an amount of money and the number of credits in the game. The player performs the inputting for advancing the game using this player terminal part 505 and the indicator P.

Next, the processing which detects a position of the user's hand which constitutes the indicator P based on the back surface image data of the back surface of the transmissive screen 503 is explained.

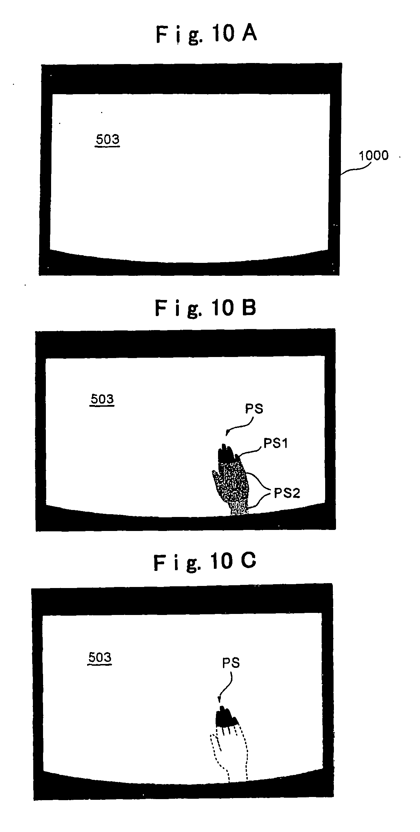

Fig. 10A shows a state in which the shade PS of the indicator P is not projected to the transmissive screen 503 and shows an example of an image which the video camera (DVC) 603 photographs the back surface of the transmissive screen 503 by way of the mirror 601. The video camera 603 is adjusted to photograph not only the transmissive screen 503 but also a peripheral portion 1000 which surrounds the transmissive screen 503. The peripheral portion 1000 is, for example, a fixed frame which is provided for fixing the transmissive screen 503 to a top plate of the table part and is preferably colored in black or in a dark color close to black.

When viewed with naked eyes, there may be a case that the image (game table) which is displayed on the front surface of the transmissive screen 503 shown in Fig. 9 also appears thin. Accordingly, the exposure of the video camera 603 is adjusted such that the image displayed on the front surface of the transmissive screen 603 is changed to white in color and disappears. Here, when the video camera 603 has the automatic exposure adjusting function, since the exposure is adjusted in conformity with the peripheral portion 1000 which is colored in black or in the dark color close to black and hence, it is possible to automatically exclude the image displayed on the front surface of the transmissive screen 503 without performing the exposure adjustment particularly.

Fig. 10B shows a state in which the shade PS of the indicator P is projected to the transmissive screen 503 and shows an example of an image which the video camera 603 photographs the back surface of the transmissive screen 503 by way of the mirror 601. In the image, the shade PS of the hand which constitutes the indicator P is present on the transmissive screen 503. In this embodiment, the shade PS is constituted of an umbra PS1 which is a thick shade and a penumbra PS2 which is a thin shade PS2. The umbra PS1 and the penumbra PS2 are formed due to the difference in distance between the transmissive screen 503 and the hand. The shade of a front portion (distal end side) of the hand which is closer to the transmissive screen 503 forms the umbra PS1 and the shade of a rear portion (arm side) of the hand which is remote from the transmissive screen 503 forms the penumbra PS2. It is possible to determine the distal end of the indicator P based on the contrast of these shades.

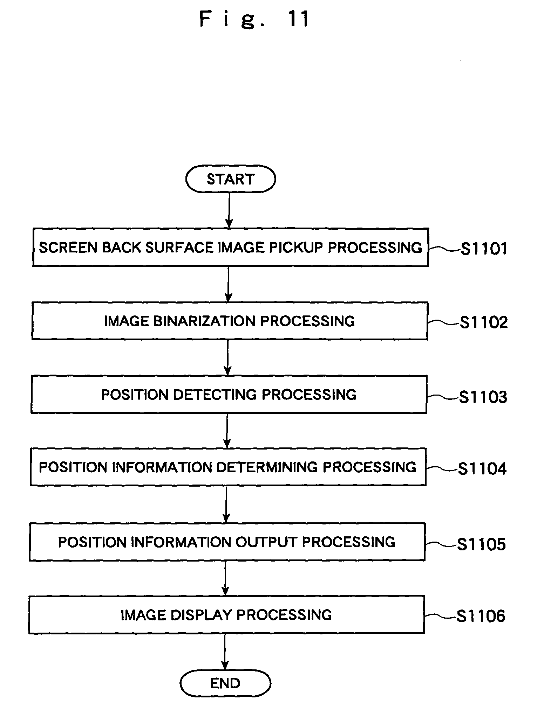

Fig. 11 is a flow chart showing an example of position detecting processing in which the gaming machine 500 of this embodiment performs the position detection of the indicator P using the back surface image data.

First of all, the gaming machine 500 performs the screen back surface photographing processing (step S1101). That is, the video camera 603 photographs the back surface of the transmissive screen 503 by way of the mirror 601 and outputs the image as shown in Fig. 10B as the back surface image data to the position detecting part 704.

Upon receiving the back surface image data, the position detecting part 704 performs the binarization processing of the back surface image data (step S1102). Fig. 10C is an image view which displays the back surface image data after the binarization processing. With respect to the shade PS of the indicator P, the thin portion such as the penumbra PS2 is subtracted and the distal end portion of the indicator P is left and hence, it becomes clear which position the indicator P is indicating. In performing the binarization processing, a proper threshold value is set to enable the specifying of the distal end portion of the indicator P. Since the proper value of the threshold value is changed depending on the environment around the gaming machine 500 (brightness of the peripheral illumination or the like), an operation test may be performed after installing the gaming machine 500 so as to find out the proper threshold value.

Next, the position detecting part 704 performs the position detecting processing based on the back surface image data after the binarization processing (step S1103). The position detecting part 704 obtains the coordinate value (x, y values) of pixels which have black values based on the back surface image data after binarization processing and generates the positional information based on the obtained coordinate values. The positional information may be the coordinate value of the pixel which constitutes a peak of the distal end portion. Alternatively, an average value or a center value of the coordinate values of all pixels which possess black values may be selected. Upon completion of the position detecting processing, the position detecting part 704 outputs the positional information generated in step S1103 to the positional information determining part 703.

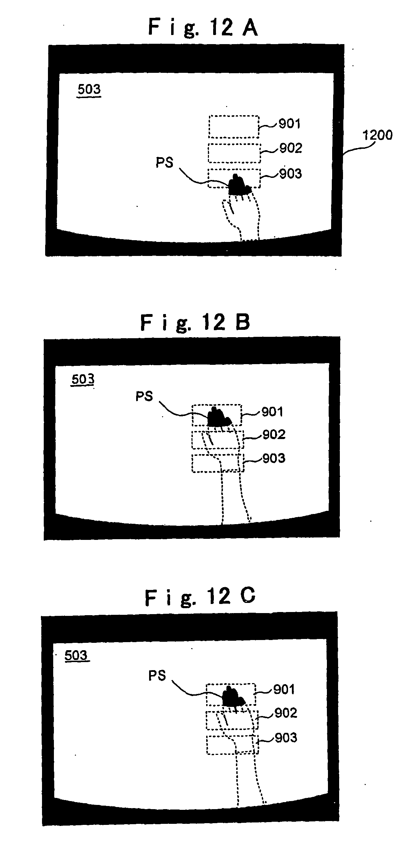

The positional information determining part 703 which receives the positional information from the position detecting part 704 performs the positional information determining processing (step S1104). Fig. 12A to Fig. 12C are views showing a series of images of back surface of the transmissive screen 503 for explaining the positional information determining processing. Fig. 12A is an example of the back surface image when the binarization processing is performed based on the preset threshold value. Here, the shade PS of the distal end portion of the indicator P is positioned in the inside of the region 903 (see Fig. 9) which constitutes one of preset input regions.

Fig. 12B shows an example of the back surface image of the transmissive screen 503 at a point of time that a given period elapses after photographing the image shown in Fig. 12A. Here, the player further extends the indicator P to indicate the region 901 which is preset another input region. The positional information determining part 703 determines that the positional information on the indicator P at the time of photographing in Fig. 12A and Fig. 12B does not exist in the same input region and does not output the positional information at either point of time.

Fig. 12C shows an example of the back surface image of the transmissive screen 503 at a point of time that a given period elapses after photographing the image shown in Fig. 12B. Here, the player continues to indicate the region 901 which is the preset input region with the indicator P. The positional information determining part 703 determines that the positional information on the indicator P at the time of photographing in Fig. 12B and Fig. 12C exists in the same input region 901 and outputs the positional information on the indicator P in Fig. 12B or Fig. 12C. Here, it may be possible to adopt the constitution which outputs the information on indicative of the input region (for example, an input region ID) in place of the positional information on the indicator P.

When the positional information determining part 703 determines that the positional information is the valid information as a result of the positional information determining processing, the positional information is transferred to the game control part 702, and the game control part 702 performs the positional information output processing (step S1105). On the other hand, when the positional information is not determined as the valid information, the positional information determining part 703 does not perform the outputting of the positional information.

The game control part 702 performs the given processing, for example, the image display processing or the like corresponding to the input region which the positional information indicates based on the positional information which the game control part 702 receives from the positional information determining part 703 (step S1106). For example, the game control part 702 determines the positional information as the designation of any one of the regions 901, 902, 903 for betting "BANKDER", "PLAYER", "DRAW", the control is performed such that the image of the pile 906 of designated chips is displayed in the inside of the region.

As described above, it is possible to realize the gaming machine 500 which can use the transmissive screen 503 which constitutes the screen unit 10 as the image display unit as the information input device 1.

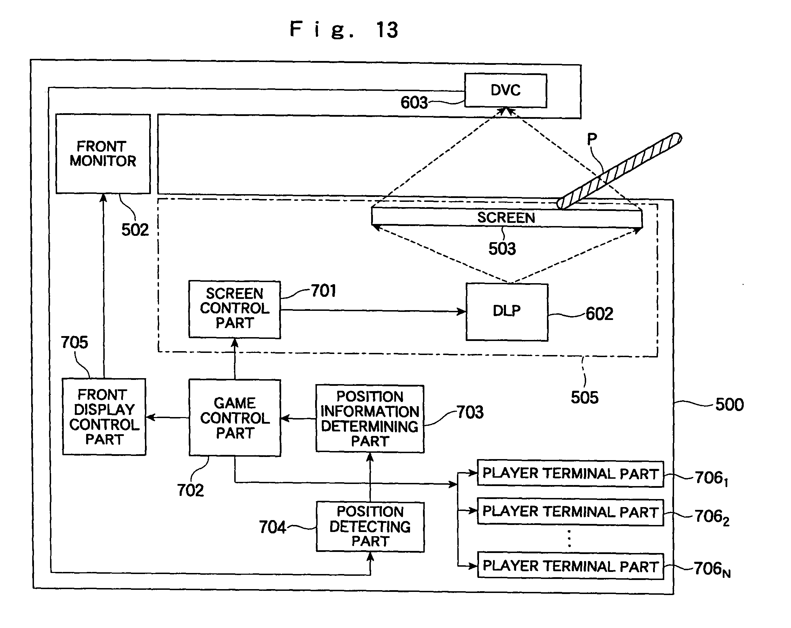

Fig. 13 shows the modification of the gaming machine 500. In this modification, the video camera 603 does not photograph the shade PS of the indicator P from above the table screen 505, but photographs the image containing the real image, and the position detecting part 704 determines the position indicated by the indicator P based on the real image. The gaming machine 500 of this modification is substantially equal to the gaming machine 500 shown in Fig. 7 with respect to other constitutional elements and the manner of operation.

### [Second embodiment]

Next, the second embodiment according to the present invention is explained.

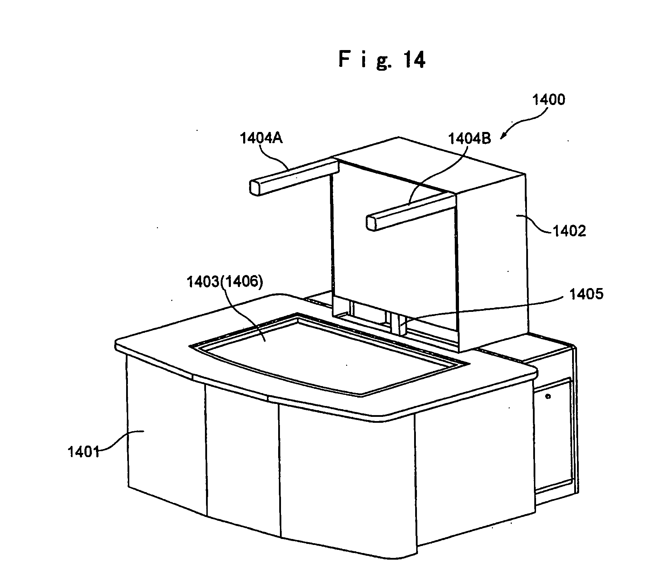

Fig. 14 is a perspective view of an appearance of a gaming machine 1400 which uses the information input device 1 according to the second mode for carrying out the present invention. Here, although the gaming machine is explained as a device which allows users to play a baccarat game, the gaming machine according to this embodiment is not limited to the baccarat game. That is, the gaming machine according to this embodiment is applicable to any game such as poker, black jack, bridge, roulette, football game, American football game, RPG, an action game or the like so long as the information input device 1 according to the present invention is applicable.

The gaming machine 1400 according to this embodiment includes a table part 1401 and a front display 1402 which is mounted on a rear portion of the table part 1401.

The table part 1401 houses the optical system and information processing equipment which constitute the information input device 1 therein. An opening is formed in a center portion of an upper surface of the table part 1401 and a transmissive screen 1403 which constitutes the screen unit 10 is extended over the opening. The transmissive screen 1403 functions as an upper display (hereinafter referred to as "table screen") which displays the game image to the players. Here, an upper portion of the transmissive screen 1403 is protected by a transparent plate member such as a glass panel thus preventing the transmissive screen 1403 from being broken or smeared even when the player touches the upper display with his/her hand which constitutes the indicator P.

Fluorescent lumps 1404A, 1404B are formed at both ends of an upper portion of the front display 1402. Here, the arrangement position of the fluorescent lumps 1404A, 1404B is not always limited to the mode shown in Fig. 13. That is, the fluorescent lumps 1404A, 1404B may be arranged at any position. Further, when there is sufficient illumination at locations where the gaming machine 1400 is installed, the fluorescent lumps 1404A, 1404B may not be provided.

On a lower side of the center of the front display 1402, a sensor 1405 which constitutes the position detecting unit 60 is provided. The sensor 1405 may be an obstacle detection photoelectric sensor (product of Hokuyo Denki Kabushiki Kaisha (Osaka, Japan), PB9 series), a laser sensor or the like. The sensor 1405 is not limited to the above-mentioned arrangement position and may be arranged at a position where the sensor 1405 emits a scanning light along the surface of the transmissive screen 1403 which constitutes the table screen 505 and can scan the position above the transmissive screen 1403.

Fig. 14 is a view showing an arrangement example of the optical system which constitutes the information input device 1 housed in the inside of the table part 1401.

To a center portion of the table part 1401, the transmissive screen 1403 is fixed in a state that the transmissive screen 1403 is protected by a glass plate or the like. A mirror 1501 is arranged in an inclined state below the transmissive screen 1403. At a position which faces the mirror 1501, a digital liquid crystal projecting unit (hereinafter referred to as "DLP") 1502 which corresponds to the projecting unit 34 is fixed. The mirror 1501 reflects the image radiated from the DLP 1502 toward the transmissive screen 1403 and the distance between the mirror 1501 and the DLP 1502 and an angle of a reflection surface are adjusted so as to project the image with a desired size.

Further, on an upper surface of the table part 1401, a sensor 1405 is arranged in a state that the sensor 1405 can perform scanning above the transmissive screen 1403 with the scanning light 1503.

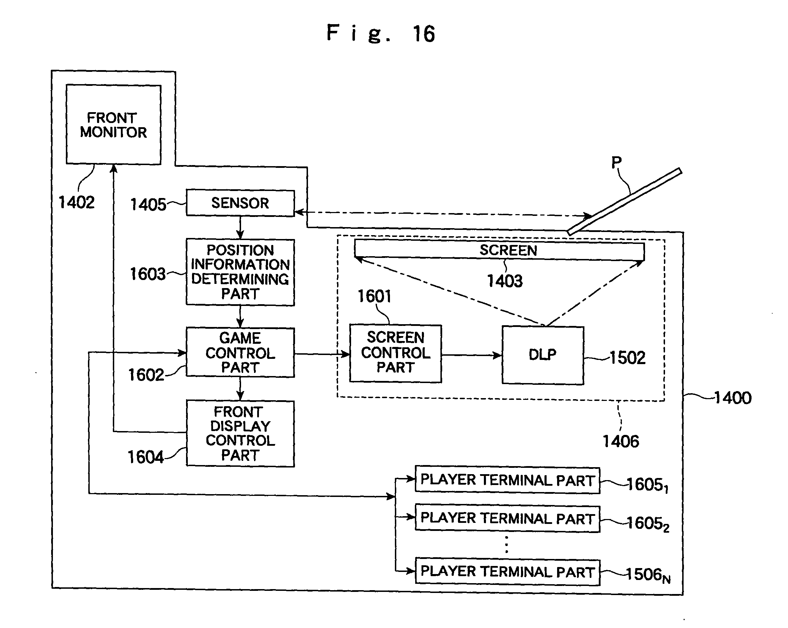

Next, an electrical constitutional example of the gaming machine 1400 is explained. Fig. 16 is a block diagram showing the electrical constitutional example of the gaming machine 1400.

As shown in Fig. 16, the gaming machine 1400 is provided with the transmissive screen 1403 which constitutes the screen unit 10. The DLP 1502 which constitutes the projecting unit 20 optically projects the image related to the game to the transmissive screen 1403. A screen control part 1601 which constitutes the image control unit 30 supplies the image data (hereinafter referred to as "front surface image data") to the DLP 1502. The transmissive screen 1403, the screen control part 1601 and the DLP 1502 form the table screen 1406 which constitutes the image display unit 40. A sensor 1405 which constitutes the position detecting unit 60 detects the position indicated by the indicator P and outputs the positional information. The positional information determining part 1603 which constitutes the positional information determining unit 70 determines whether the indicator P is present in a fixed region for a given period or not and, when the indicator P is present in the fixed region is for the given period, outputs this positionalinformation asvalidinformation. A game control part 1602 which constitutes the whole control unit 80 has a function of controlling the operation of the gaming machine 1400. The game control part 1602 instructs which display data is to be outputted to the screen control part 1601 and at which timing the image data is to be outputted. At the same time, the game control part 1602 receives the positional information from the positional information determining part 1603 and controls the gaming machine 1400 based on this positional information.

The front display control part 1604 outputs image data of the image to be displayed on the front display 1402 (hereinafter referred to as "front image data") in response to the instruction from the game control part 1602. The front display 1402 receives and displays the front image data. The image displayed on the front display 1402 informs, in cooperation with the image displayed on the transmissive screen 1403, the situation, the progress and the like of the game to the players. In this example, a dealer of baccarat shown in Fig. 8 is displayed as a moving image on the front display 502 in the same manner as the first embodiment.

The image displayed on the front display 1402 may be controlled based on the positional information detected by the sensor 1405. For example, the dealer who is displayed on the front display 1402 may be displayed in a state that the direction of his/her face or body can be changed to face the position in an opposes manner in accordance with the positional information.

On the table screen 1406, in the same manner as the first embodiment, the screen which is displayed as shown in Fig. 9 is displayed. That is, a screen which imitates a baccarat table is displayed on the table screen 1406. On the baccarat table illustrated in the example, regions 901, 902, 903 for betting to "BANKER", "PLAYER", "DRAW" are displayed for five respective players. By allowing the player to indicate any one of the regions 901, 902, 903 using his/her hand which constitutes the indicator P or the like, the information on which one of the "BANKER" , "PLAYER" , "DRAW" the player bets is inputted to the gamingmachine 1400. Here, the number of chips, an amount of money and the number of credits for betting can be decided by the player using a betting button of a player terminal part 1605 described later. A pile of chips which each player possesses can be also displayed on the table screen 1406. When the player instructs his/her betting to anyone of the "BANKER" , "PLAYER" , "DRAW" using the indicator P, the image is changed to allow the table screen 1406 to perform the display in which the number of chips which are bet are moved to any one of the regions 901, 902, 903 which are designated by the indicator P from a pile of chips in front of the player.

Returning back to Fig. 16, the electrical constitutional example of the gaming machine 1400 is further explained.

To the game control part 1602, a plurality of player terminal parts 1605₁ to 1605_{N} are connected. Each player terminal part 1605 is a terminal which allows the player to receive coins, bills, prepaid cards, credit cards or the like and to change them to credits (coins/medals) which can be used in the gaming machine 1400. The player terminal part 1606 also has a delivery function of paying out the credits (coins/medals) which the player terminal part 706 possesses in response to the payout indication from the player at a point of time that the payout indication is made and a bet inputting function for determining the number of bets, an amount of money and the number of credits in the game. The player performs the inputting for advancing the game using this player terminal part 1605 and the indicator P.

Next, the processing which detects a certain position on the table screen 1406 indicated by the player's hand which constitutes the indicator P is explained.

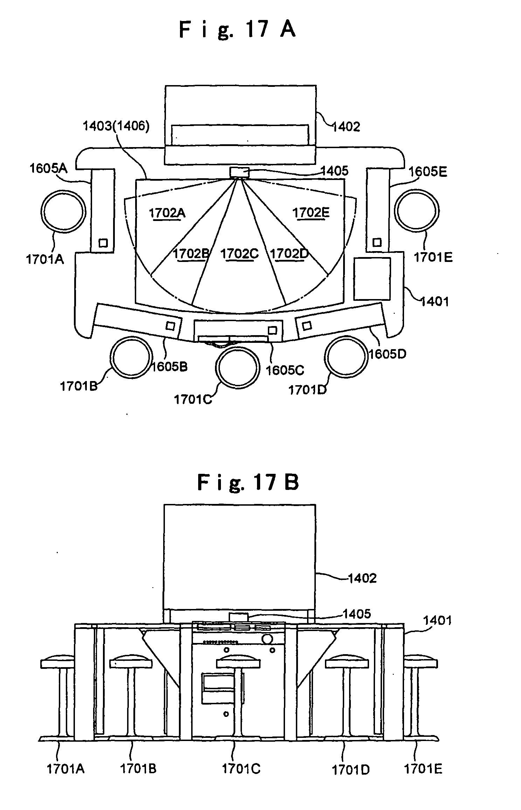

Fig. 17A is a plan view as viewed from above the gaming machine 1400 and shows a state that the sensor 1405 which is mounted on the gaming machine 1400 scans over the table screen 1406, while Fig. 17B is a front view of the gaming machine 1400 which corresponds to Fig. 17A.

The sensor 1405 radiates the scanning light such that the scanning light passes over the table screen 1406. The sensor 1405 rotates the scanning light from the right to the left or from the left to the right about the sensor 1405 so as to scan the whole region above the table screen 1406. For example, the sensor 1405 repeats the radiation of the scanning light and the reception of the reflection light by rotating the radiation direction of the scanning light at intervals of 0.5 degrees.

In this embodiment, based on the positional detection performed by the sensor 1405, it is also possible to determine who instructs the position among the players. In the gaming machine 1400, stools 1701A to 1701E on which five players at maximum can sit are provided and regions that the respective player's hands can reach are limited. In front of the sitting positions of the respective players, the player terminal parts 1605A to 1605E which are incorporated into the table part 1401 are provided. Each one of the player terminal parts 1605A to 1605E includes a bet button, a cancel button, a payout button (not shown in the drawing) and the like and receives the input instruction from the player.

Respective regions 1702A to 1702E which are shown in Fig. 17A are regions which the respective player's hand can reach. For example, the region 1702A is a region which the hand of the player who makes use of the stool 1701A can reach. When a certain position above the table screen 1406 which is in the inside of the region 1702A is indicated, it is determined that the position is the position which is indicated by the player who makes use of the stool 1701A. The sensor 1405 determines the region in which the positional detection is performed among the regions 1702A to 1702E based on the radiation direction of the scanning light, determines the indication as the positional indication made by the player corresponding to the region, and transmits the information identifying the player corresponding to the positional information (for example, player number) to the positional information determining part 1603.

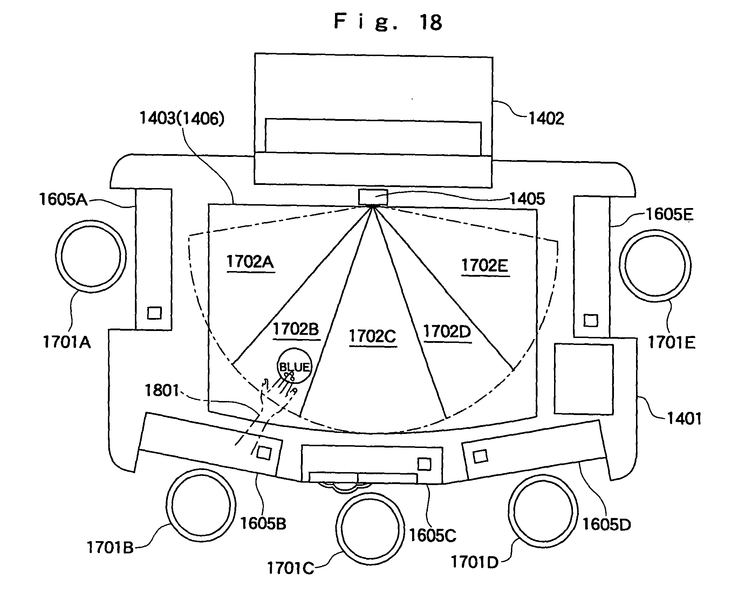

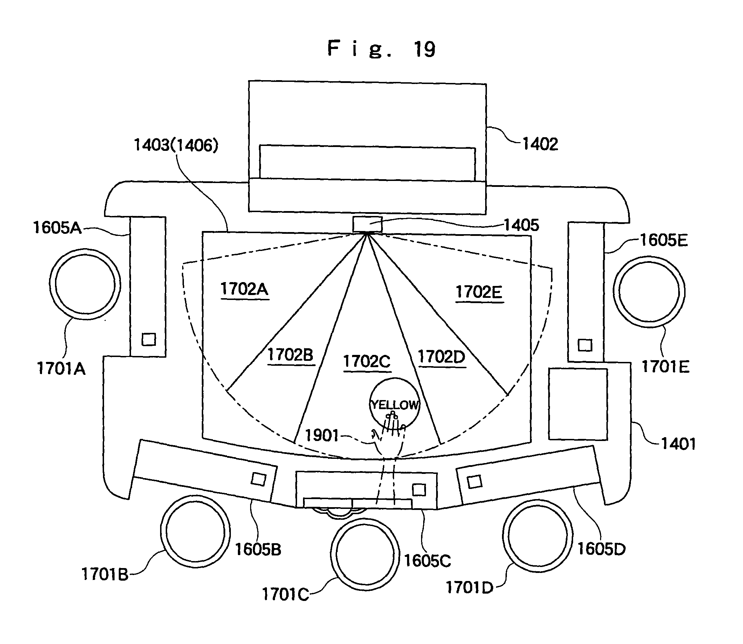

Fig. 18 shows a state in which player indicates the position in the region 1702B. The player indicates the certain position in the inside of the region 1702B on the table screen 1406 using his/her hand 1801 which constitutes the indicator P. The sensor 1405 detects the indicated position and determines, based on the fact that the indicated position is in the inside of the region 1702B, that the indicated position is attributed to the player (the player who sits on the stool 1701B and makes use of the player terminal part 605). Fig. 19 shows a state in which the player indicates the position in the region 1702C. The player indicates a certain position in the inside of the region 1702C on the table screen 1406 using his/her hand 1901 which constitutes the indicator P. The sensor 1405 determines, based on the fact that the indicated position is in the inside of the region 1702B, that the indicated position is attributed to the player (the player who sits on the stool 1701C and makes use of the player terminal part 1605C).

According to this method, the colors (for example, red, blue, yellow, green, white) of chips which the respective players use can be respectively determined and, based on the detected positional information, these colors can be displayed at places on the table screen 1406 which the positional information indicate.

Here, in this embodiment, the explanation is made with respect to the constitution in which the whole region on the table screen 1406 is scanned by one sensor 1405. However, the present invention is established even when a plurality of sensors 1405 are provided and the respective sensors 1405 are arranged to scan the respectively allocated regions on the table screen 1406. For example, two sensors 1405 are provided, wherein one sensor 1405 is allocated to the right half region of the table screen 1406 and the other sensor 1405 is allocated to the left half region of the table screen 1406.

According to the above-mentioned position detecting method, even when the plurality of players indicate the positions on the table screen 1406 simultaneously, it is possible to recognize the players corresponding to the respective indicated positions.

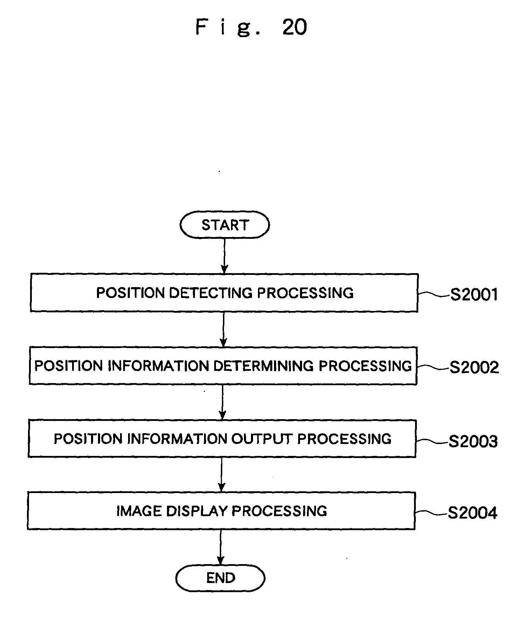

Fig. 20 is a flow chart showing one example of position detecting processing which performs the position detection of the indicator P using the sensor 1405.

First of all, the sensor 1405 performs the position detection processing (step S2001). The sensor 1405 performs scanning above the table screen 1406 using the scanning light, determines whether the reflection of the scanning light attributed to the indicator P exists or not, measures the intensity and the light quantity of the reflection light when the reflection of the scanning light exists, and performs the calculation of position by specifying the direction and the distance. Next, the sensor 1405 outputs the calculated position to the positional information determiningpart 1603 as the positional information (for example, xy coordinate value). The sensor 1405 may output the player identification information (for example, the player number) corresponding to the positional information together with the positional information.

Next, upon receiving the positional information, the positional information determining part 1603 performs the positionalinformation determining processing (step S2002). That is, the positional information determining part 1603 determines whether the indicator P is within the fixed region for a given period and, when it is determined that the indicator P is in the fixed region for the given period, the positional information is outputted as the valid information. For example, the positional information determining part 1603 stores the positional information X1 after receiving such information. When the positional information determining part 1603 receives new positional information X2 after a lapse of the given period T, the positional information determining part 1603 determines whether the coordinate values of the positional information X1, X2 fall within the same input regions (for example, regions 901, 902, 903).

When the positional information determining part 1603 determines that the positional information is valid in the positional information determining processing, the positional information determining part 1603 performs the positional information outputting processing (step S2003). When the positional information determining part 1603 determines that the positional information is not valid in the positional information determining processing, the positional information determining part 1603 does not perform the positional information outputting processing.

The positional information which is outputted from the positional information determining part 1603 by performing the positional information outputting processing is transferred to the game control part 1602. The game control part 1602 determines the kind of image to be displayed on the table screen 1406 and/or the front display 1402 based on the received positional information and allows the table screen 1406 and/or the front display 1402 to perform the image display processing (step S2004). For example, the positional information is determined as the designation of any one of regions 901, 902, 903 for betting to "BANKER", "PLAYER", "DRAW" and, thereafter, the screen control part 1601 is instructed to display the designated chip image to the inside of the region, whereby the screen control part 1601 generates the image data in response to the instruction.

As described above, according to this embodiment, it is possible to realize the gaming machine 1400 which makes use of the table screen 1406 as the image display unit which also functions as the input unit.

### [Modification of embodiment]

In the first embodiment, the gaming machine 500 may obtain the number of inputting performed by the player. In the gaming machine, there may be a case in which the player is requested to tap the same region several times quickly as a requirement of specific processing. For example, following processing may be taken. That is, when the tapping is performed once, the tapped place is selected as the betting place, while the tapping is performed twice, the betting position is cancelled.

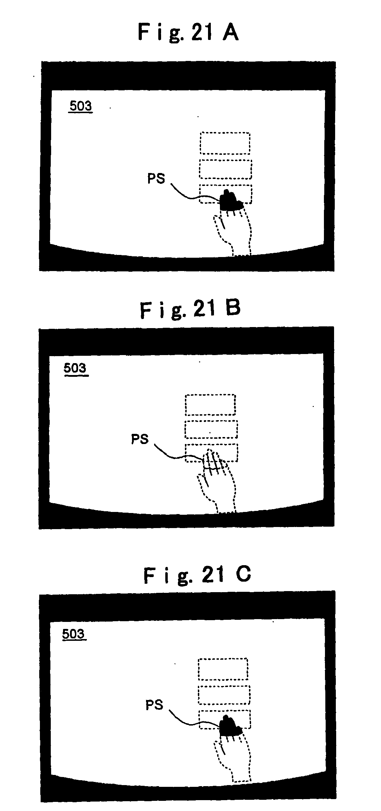

In the first embodiment, the positional information determining part 703 may be configured to determine the number of inputting based on the change of the contrast of the shade PS in a given period. Fig. 21A to Fig. 21C show a screen example in which the number of inputting based on the change of the contrast of the shade PS is determined. That is, Fig. 21A to Fig. 21C show an example of the continuous back surface image views within the given period. Fig. 21A shows an image after the binarization processing when the player performs the first tapping and extends his/her hand and touches the table screen 505 with his/her hand. Fig. 21B shows an image after the binarization processing when the player performs pulls his/her hand from the table screen 505 to perform the second tapping. Fig. 21C shows an image after the binarization processing when the player performs the second tapping and brings his/her hand in contact with the table screen 505. By counting the contrast (presence and non-presence) of the shade PS within the same inputting region which occurs within the same period, the contrast is recognized as the number of tapping and the information on the number of tapping is transferred to the game control part 703. The game control part 703 performs the given processing corresponding to the number of tapping.

### [Third Embodiment]

Next, the third embodiment is explained.

The third embodiment is characterized by realizing the gaming machine 500 which can prevent the erroneous recognition of the inputting by the players. That is, in the gaming machine 500 according to the first embodiment, even when the player extends his/her arm over a plurality of his/her own regions out of "BANKER", "DRAW" and "PLAYER", it is possible to make the gaming machine 500 accurately recognize the player's intension. Here, the constitution and the manner of operation of the gaming machine 500 according to the third embodiment are substantially equal to the constitution and the manner of operation of the gaming machine 500 of the first embodiment and hence, their detailed explanation is omitted.

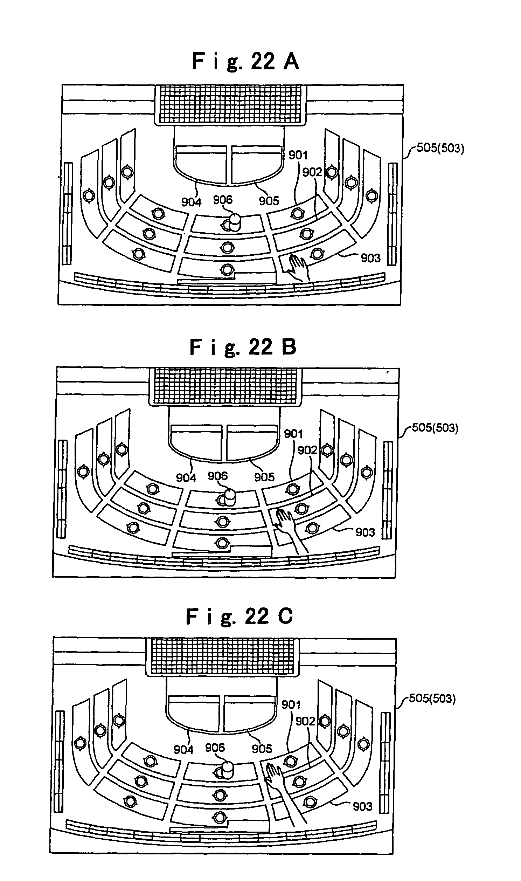

Fig. 22A to Fig. 22C are views showing a state in which among players of the gaming machine 500, the second player from the right facing the gaming machine 500 extends his/her hand to the input regions 901 to 903 which are his/her regions and designates the region which the player desires. Fig. 22A is the view which shows the player designating the frontmost region 903, Fig. 22B is the view which shows the player designating the intermediate region 902, and Fig. 22C is the view which shows the player designating the deepest region 901.

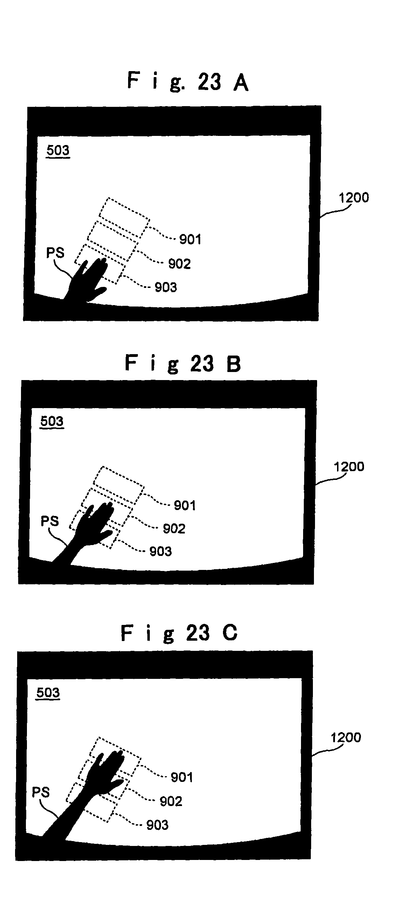

Fig. 23A to Fig. 23C are views showing examples of the images which are obtained by photographing the back surface of the transmissive screen 503 which corresponds to Fig. 22A to Fig. 22C. In the example shown in Fig. 23A, the shade PS is present only in the inside of the region 903. Accordingly, the gaming machine 500 determines that the region 903 is designated by the player. In the example shown in Fig. 23B, the shade PS is present in the inside of the regions 902 and 903. Accordingly, although the region which the player designates is the region 902, there exists the possibility that the gaming machine 500 determines that the both of regions 902, 903 are simultaneously selected by the player. Further, in the example shown in Fig. 23C, the shade PS is present in the inside of the regions 901, 902 and 903. Accordingly, although the region which the player designates is the region 901, there exists the possibility that the gaming machine 500 determines that all regions 901, 902, 903 are simultaneously selected by the player.

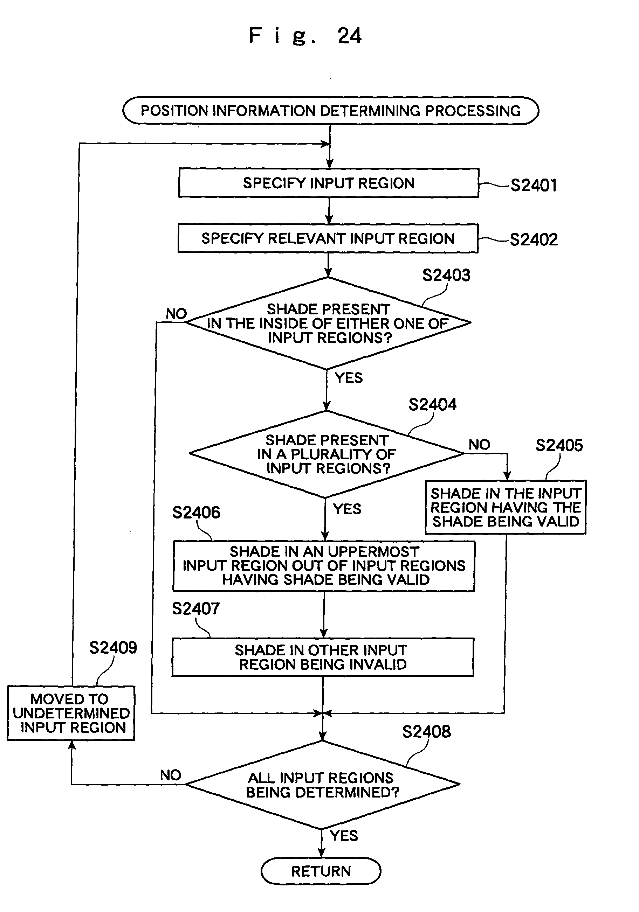

To avoid the above-mentioned the occurrence of such erroneous recognition that the plurality of regions are simultaneously designated, the positional information determining part 703 of the gaming machine 500 according to the third embodiment performs, in the positional information determining processing (step S1104) which is one of the processing of the positional information determining part 703, the positional information determining processing shown in Fig. 24. Fig. 24 is a flow chart showing one example of the positional information determining processing carried out by the positional information determining part 703 according to the third embodiment.

First of all, the positional information determining part 703 specifies the input region (region) and the positional information determining part 703 determines whether the shade is preset or not (step S2401). Next, the related input region which is related with the specified input region is specified (step S2402). The related input region is an input region having the possibility that when a certain input region is designated by the player, the shade is formed in the former input region in accordance with such designation. For example, the regions 901, 902, 903 which belong to the same row shown in Fig. 23 constitute the related input region each other with respect to other input regions. The input regions which have possibility to become the related input regions are prestored in the positional information determining part 703 as a table.

For example, with respect to the examples shown in Fig. 23A to Fig. 23C, when the region 903 is specified as the input region in step 2401, the regions 901, 902 are specified as the related input regions in step S2402.

Next, the positional information determining part 703 determines whether the shade is present in the specified input region and the related input region or not (step S2403). When there is no shade in either one of these input regions (step S2403, No), the positional information determining part 703 determines whether the determination is performed with respect to all input regions (including the related input region) in the inside of the transmissive screen 503 (table screen 505) or not (step S2408). When the determination is made with respect to all input regions in the inside of the transmissive screen 503 (table screen 505) (step S2408, Yes), the positional information determining processing is finished and the operation returns to the processing shown in Fig. 11. On the other hand, when the determination is not made with respect to all input regions in the inside of the transmissive screen 503 (table screen 505) (step S2408, No), the operation advances to any one of the undetermined input region in the inside of the transmissive screen 503 (table screen 505)(step S2409).

Here, in step S2403, when the shade is present in either one of input regions (step S2403, Yes), the positional information determining part 703 determines whether the number of input regions which include the shade out of the input regions (including the related input regions) is plural or not (step S2404). When it is determined that the number of input regions which include the shade is not plural (step S2404 No), the positional information determining part 703 determines the presence of the shade in the input region including the shade as valid (step S2406). For example, in the example shown in Fig. 23A, among three input regions (including the related input region) which are constituted of the regions 901 to 903, only the region 903 includes the shade. Accordingly, the positional information determining part 703 determines the shade of the region 903 as valid (step S2405). As a result, it is determined that the region 903 is designated by the player.

On the other hand, in step S2404, when it is determined that the number of input regions which include the shade is plural (step S2404 Yes), the positional information determining part 703 determines the presence of the shade in the uppermost input region out of the input regions including the shade as valid (step S2406) and determines the shade in other input regions as invalid (step S2407). The order among the related input regions is predetermined and the related input regions are stored in the positional information determining part 703. In the examples shown in Fig. 22A to Fig. 22C and in Fig. 23A to Fig. 23C, with respect to three input regions 901 to 903 which constitute the regions, the region 901 assumes the highest rank, the region 902 assumes the intermediate rank, and the region 903 assumes the lowest rank. Accordingly, in the example shown in Fig. 23B, since the shade is present in the regions 902, 903, the shade of the region 902 having the higher rank is determined valid in step S2406 and shade of the region 903 which constitutes other input region is determined invalid. As a result, it is determined that only the region 902 is designated by the player. Also in the case of the example shown in Fig. 23C, in accordance with the same processing method, the shade of the region 901 which assumes the highest rank is determined valid in step S2406 and the shade in regions 902, 903 which constitute other regions are determined invalid in step S2407. As a result, it is determined that only the region 901 is designated by the player without being influenced by the shade on other regions 902, 903.

### [Fourth Embodiment]

Next, the fourth embodiment of the present invention is explained.

The fourth embodiment is characterized by realizing the gaming machine 500 which has the following constitution. That is, in the gaming machine 500 according to the first embodiment, a shade which shows an indicating position of the player is determined based on a threshold value which is set corresponding to the position above the transmissive screen 503 , and the threshold value is determined in response to the distance from the DLP 602 or the illuminance above the transmissive screen 503. Here, the constitution and the manner of operation of the gaming machine 500 according to the fourth embodiment are substantially equal to the constitution and the manner of operation of the gaming machine 500 of the first embodiment and hence, their detailed explanation is omitted.

The transmissive screen 503 receives the radiation to reflect the image thereon using the DLP 602. The surface of the transmissive screen 503 becomes brighter as the surface approaches the center of illumination light radiated from the DLP 602, while the surface of the transmissive screen 503 becomes darker as the surface is separated from the center of illumination light radiated from the DLP 602. Accordingly, the shade PS which is formed on the transmissive screen 503 also receives the influence of the illumination light of the DLP 602, wherein the depth of the shade is decreased by being offset by the illumination light at the center of radiation and receives less influence of the illumination light as the shade is separated from the center of radiation by receiving the influence of the illumination light of the DLP 602 and hence, the depth of the shade is increased. Due to such influence of the illumination light, when the transmissive screen 503 is configured such that the threshold value which is set for performing the determination of the presence and non-presence of the shade is set at a fixed value with respect to all positions on the surface (either one of the front surface and the back surface) of the transmissive screen 503, there arises a possibility that it becomes difficult to determine the presence of the shade as the transmissive screen 503 approaches the center of radiation of the DLP 602, while it becomes easy to determine the presence of the shade as the transmissive screen 503 is separated from the center of radiation of the DLP 602. Accordingly, in this embodiment, the threshold value is set corresponding to the distance from the center of the illumination light or the illuminance on the transmissive screen 503. In this manner, the determination of the presence of the shade is performed by taking the influence of the radiation light from the DLP 602 into consideration.

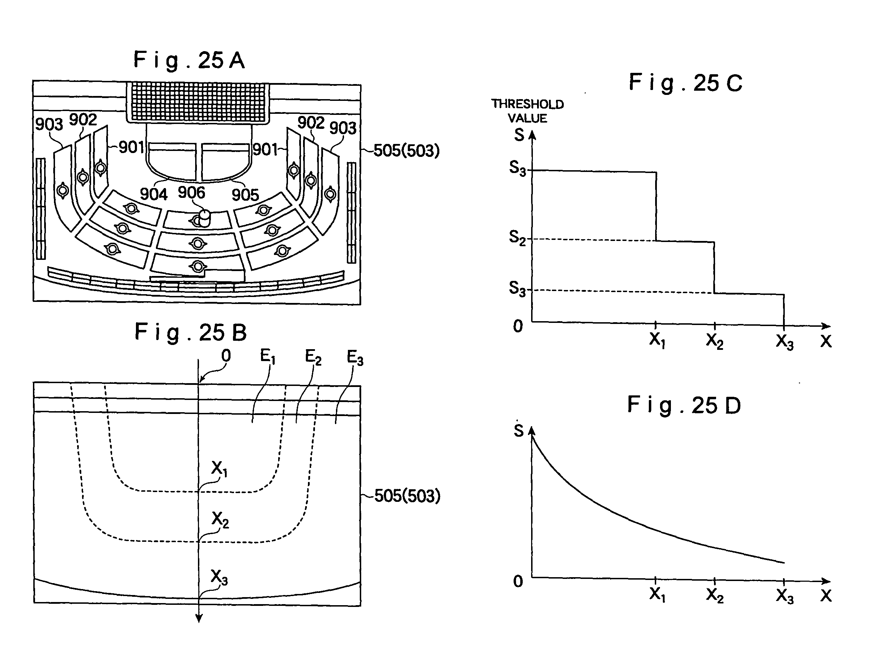

Fig. 25A shows a mode in which the image is projected to the surface of the transmissive screen 503 from the DLP 602. Fig. 25B shows a mode in which with respect to the transmissive screen 503 shown in Fig. 25A, the threshold value which is served for performing the determination of the presence of the shade corresponding to the distance from the center of the illumination light from the DLP 602 is set in a divided manner in accordance with three regions. In Fig. 25B, the center of the illumination light of the DLP 602 is arranged at an origin O and regions E1, E2, E3 are determined in order from the region close to the origin O. With respect to coordinates positions (pixels) which are respectively included in the regions E1, E2, E3, the threshold values are set in the descending order of S3, S2, S1 (S3>S2>S1). Here, in this example, when the energy (brightness or the like) at the coordinate position (pixel) is equal to or below the threshold value, the presence of the shade is determined, while when the energy at the coordinate position exceeds the threshold value, the non-presence of the shade is determined. By adopting such a threshold value setting method, even the thin shade which is not determined as a shade in the region E3, for example, is determined as a shade in the region E1 and hence, it is possible to perform the determination of the presence of the shade by excluding the influence of the illumination light of the DLP 602,

Fig. 25C is a view showing the change of the threshold value in the X-axis direction in Fig. 25B.

In this embodiment, the threshold values are not limited to the manner of setting the threshold values in which the threshold values are set for every region. Fig. 25D shows the manner of setting the threshold values different from the manner of setting the threshold values shown in Fig. 25C. In this example shown in Fig. 25D, the change of the threshold value in the X-axis direction is set to assume an approximately inverse continuous exponential curve.

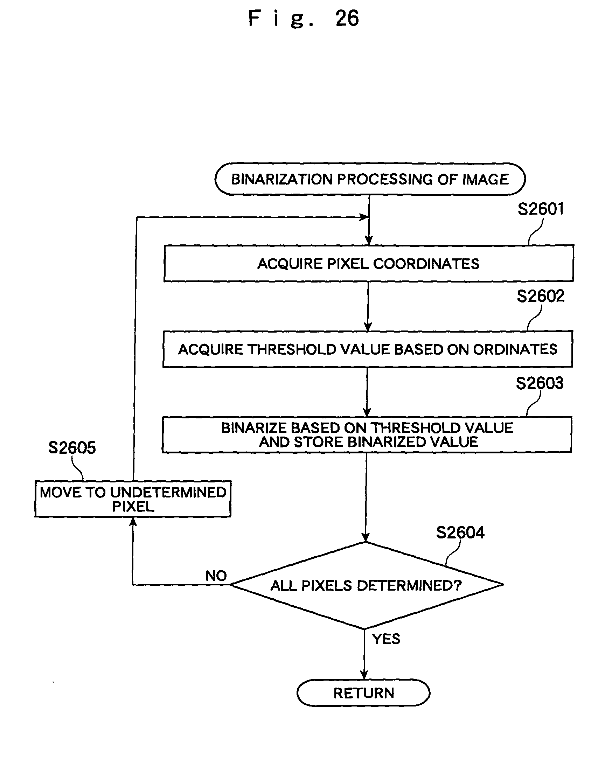

Fig. 26 shows a flow chart showing a specific example of the binarization processing of the image in the fourth embodiment (Fig. 11, step S1102). When the binarization processing of the image starts, the position detecting part 704 specifies the pixels which become objects of the binarization and obtains the coordinates positions of these pixels (step S2601). Next, the position detecting part 704 obtains the threshold values based on the coordinates (step S2602). The position detecting part 704 stores a table which sets the threshold values for every coordinate value and the threshold values corresponding to the coordinates positions are obtainable with reference to the table. The threshold values are set in response to the distance from the DLP 602 or the illuminance of the position by the DLP 602.

Next, the position detecting part 704 compares the energy of the pixel with the obtained threshold value and performs the determination whether the pixels form the shade or not (1 or 0) and stores the determination result (step S2603).

Next, it is determined whether the determination is performed on all pixels (step S2604). When the pixels which are not subjected to the determination still remain (step S2605, No), the operation advances to the undetermined pixels and step S2601 and succeeding steps are continued.

When the determination is finished with respect to all pixels, the binarization processing of the image is finished and the operation returns to the processing shown in Fig. 11.

According to this embodiment, it is possible to perform the determination of the presence of the shade by taking the influence of the illumination light of the DLP 602 which constitutes the projecting unit into consideration.

Although the constitution and main advantageous effects of the present invention have been explained in conjunction with the embodiments, the present invention can also obtain following advantageous effects.

For example, when the player extends his/her arm such that the arm covers all of three betting frames consisting of "BANKER", "DRAW" and "PLAYER" which are allocated to his/her input regions and, thereafter, indicates the bet frame which is at the remotest position from himself/herself with his/her hand, a shade of the arm falls on another two bet frames arranged on the player side from the remotest position and there exists the possibility that the information input device erroneously recognize that all of "BANKER", "DRAW" and "PLAYER" are indicated. However, due to the above-mentioned constitution, it is possible to make the information input device accurately recognize the intension of the player that the betting frame is positioned remotest from himself/herself and hence, the erroneous recognition can be prevented.

Due to the characteristics that the closer the distance between the indicator and the screen, the shade becomes thicker, while the remoter the distance between the indicator and the screen, the shade becomes thinner, by detecting the change of the contrast of the shade, in this aspect of the present invention, it is possible to detect the vertical movement with respect to the screen such as the pushing operation of the indicator to the screen and the detected value can be processed as the inputting information.

The screen receives the radiation for reflecting the image from the projecting unit, wherein the illuminance at the center of the radiation of the projecting unit is high and becomes darker as the position is separated from the center. Accordingly, the shade which is formed on the screen also receives the influence of the radiation of the projecting unit such that the depth of shade is small at the center of the radiation of the projecting unit and becomes larger as the position is separated from the center. Assuming the constitution in which the threshold value for determining the presence/non-presence of shade with respect to all positions on the surface of the screen (either one of the front surface and the rear surface) is set to a fixed value, there arises the possibility that it is dif f icult to determine the presence of the shade when the position approaches closer to the center of the radiation of the projecting unit, while the presence of the shade can be easily determined as the position is separated from the center of the radiation. Accordingly, the determination of the presence of the shade is performed by taking the influence of the radiation of the projecting unit into consideration such that the threshold value is set corresponding to the distance from the projecting unit or the illuminance on the screen.

The present invention is not limited to the gaming machine and is applicable to all devices and systems which perform the reception of inputting of the players by making use of the image display and the displayed image such as the information input device for presentation, the demonstration device for promoting sales and the like.

## Claims

1. An information input device comprising:
a table means which has one or a plurality of input regions;
a position detecting means which detects a position of an object on the table and outputs positional information on the object; and
a positional information determining means which determines whether the position of the object is in any one of the input regions for a given period based on the positional information on the object from the position detecting means and treats the positionalinformation valid when the positional information determining means determines that the object is in the input region for the given period.

2. An information input device comprising:
a projecting means which projects an image having a plurality of input regions;
a screen means which allows the image projected by the projecting means to be focused thereon and allows a shade of an indicator which indicates the image to be reflected thereon;
an image taking means which takes an image of a back surface of the screen and outputs image data which contains the shade of the indicator;
a position detecting means which detects the position which is indicated by the indicator based on the image data and outputs the detected position as positional information; and
a positional information determining means which determines whether the indicator is in any one of the input regions for a given period based on the positional information from the position detecting means and treats the positional information valid when the positional information determiningmeans determines that the indicator is in the input region for the given period, wherein
the position detecting means determines the position of the indicator based on a contrast of the shade.

3. An information input device according to claim 2, wherein the positional information determining means measures a change of contrast of the shade for a given period and performs the determination of the number of inputs in response to the result of measurement.

4. An information input device according to claim 1, wherein when the positional information on the object from the positional detector indicates that the object is positioned over a plurality of input regions, the positional information determining means treats the positional information on any one of the plurality of input regions as valid information and the positional information on other input regions as invalid information.

5. An information input device according to claim 2, wherein the positional information is determined based on a threshold value predetermined in response to the position on the screen and the threshold value is set in response to a distance from the projecting means.

6. An information input device according to claim 2, wherein the positional information is determined based on a threshold value predetermined in response to the position on the screen and the threshold value is set corresponding to the illuminance on the screen.

7. An information input method for operating an information input device which includes a table means which has one or a pluralityof input regions , the method comprising the steps of:
detecting a position of an object on the table means and outputs positional information on the object; and
determining whether the position of the object is in any one of the input regions for a given period based on the positional information on the object and treats the positional information valid when it is determined that the object is in the input region for the given period.

8. An information input method comprising the steps of:
projecting an image having a plurality of input regions;
focusing the projected image on a screen and reflecting a shade of an indicator which indicates the image on the screen;
taking an image of a back surface of the screen and outputting image data which contains the shade of the indicator;
detecting the position which is indicated by the indicator based on the image data and outputting the detected position as positional information; and
determining whether the indicator is in any one of the input regions for a given period based on the positional information and treating the positional information valid when it is determined that the indicator is in the input region for the given period, wherein
the position of the indicator is determined based on a contrast of the shade.
